Europäisches Patentamt

European Patent Office

Office européen des brevets

(19)

(11) Publication number:

**0 342 964**
**A2**

(12)

# EUROPEAN PATENT APPLICATION

(21) Application number: **89305000.5**

(22) Date of filing: **17.05.89**

(51) Int. Cl.⁴: **G 06 F 15/40**

(30) Priority: **17.05.88 JP 119956/88**

(43) Date of publication of application:
**23.11.89 Bulletin 89/47**

(84) Designated Contracting States: **DE GB**

(71) Applicant: **SHARP KABUSHIKI KAISHA**
**22-22 Nagaike-cho Abeno-ku**
**Osaka 545 (JP)**

(72) Inventor: **Tanaka, Junji**
**2-2-7-309, Nogaito-cho**
**Yamatokoriyama-shi Nara-ken (JP)**

**Ijuin, Makoto**
**1-22-403, Tsurumainishi-machi**
**Nara-shi Nara-ken (JP)**

**Yoshioka, Masamitu**
**Yoshimoto-so 109-58, Minaminagai-cho**
**Nara-shi Nara-ken (JP)**

**Nagasawa, Hiroyuki**
**28-401 Kodan 3-1 Kataokadai Kanmaki-cho**
**Kitakatsuragi-gun Nara-ken (JP)**

(74) Representative: **Ranson, Arthur Terence et al**
**W.P. Thompson & Co. Coopers Building Church Street**
**Liverpool L1 3AB (GB)**

(54) **Data retrieval system.**

(57) A data retrieval system comprises a first display means for displaying a plurality of indexes which are useful in retrieving a group of data, a first selection means (21) for selecting at least one of the indexes (20) displayed on the first display means, a retrieval means (5 to 11) for retrieving the data, based on the selected index, a second display means (W) for displaying retrieved data and a second selection means (22) for selecting one of said retrieved data displayed on the second display means.

EP 0 342 964 A2

Bundesdruckerei Berlin

## Description

## A DATA RETRIEVAL SYSTEM

The present invention relates to a data retrieval system, and more particularly to a data retrieval system by which data in an address date management system or the like can be easily retrieved.

A date management system such as an address date management sysem for processing address data on clients is widely effected by using a computer. In a conventional data management system, there are generally two display types for showing retrieved data to an operator; the list format; and the card format. In an address data management system, regardless of the display type employed in the system, the data on individual clients are arranged in a particular order, for example, in alphabetical order of the names or in the input order of the data.

When looking up the data of a desired person from a group of data entered in an address data management system, the data are sequentially displayed on a display such as a CRT by moving a cursor in a list on the display (the list format), or by showing the contents of a card one by one on the display (the card format). The operator checks the item (for example, name) of the displayed data to confirm that the data belongs to the desired person.

In such an address management system, a lot of labor and time are required to search the data on the desired person from numerous number of data, because the data content should be checked one by one from the beginning or the end of the group of data.

To solve this problem, such a data management system is generally provided with a retrieval function. By using this retrieval function, it is possible to find the wanted data easily and in a shorter time in comparison with such a system in which the data must be searched sequentially.

When using a retrieval function in a conventional system, however, it is necessary to input one or more conditional expressions for executing retrieval. An example of such a conditional expression consists of a logical product of the spelling of the name of a questioned person and the spelling of the name of the company in which the questioned person works. When this conditional expression is input, the data satisfying the condition is retrieved. If multiple groups of data are obtained as a result of one retrieval operation, another conditional expression is input to conduct an additional retrieval, thereby obtaining the data on the desired person. In order to get the desired data, hence, it is necessary to execute many complex processes even when a retrieval function is employed. In this way, a prior art data retrieval system involves difficulties in that it requires a long period of time for conducting a retrieval process and that the operation of conducting a retrieval process is complicated.

The data retrieval system in accordance with a first aspect of the present invention, which aims to overcome the above-discussed and numerous other disadvantages and deficiencies of the prior art, comprises a first display means for displaying a plurality of indexes which are useful in retrieving a group of data;
a first selection means for selecting at least one of said indexes displayed on said first display means;
a retrieval means for retrieving data, based on said selected index;
a second display means for displaying retrieved data; and
a second selection means for selecting one of data displayed on said second display means.

The data retrieval system in accordance with a second aspect of the present invention comprises a first display means for displaying a plurality of indexes which are useful in retrieving a group of data;
a first selection means for selecting at least one of said indexes displayed on said first display means;
a retrieval means for retrieving data, based on said selected index;
a second display means for displaying retrieved data;
a second selection means for selecting one of said retrieved data displayed on said second display means;
a detection means for detecting a further selection of another index during the display of said retrieved data on said second display means; and
a control means for controlling said retrieval means to retrieve other data, based on said other selected index, when said detection means detects the further selection.

In a preferred embodiment, the first selection means comprises a first mark which is displayed on said first means, said first mark being movable along said displayed indexes.

In a preferred embodiment, the second selection means comprises a second mark which is displayed on said second display means, said second mark being movable along said displayed data.

In a preferred embodiment, the control means controls said second display means to quit the display of said retrieved data when said detection means detects the further selection.

Thus, the invention described herein makes possible the objectives of (1) providing a data retrieval sytem which can retrieve desired data in a short time; and (2) providing a data retrieval system which is easy to operate.

By way of example only, a specific embodiment of the present invention will be described, with reference to the accompanying drawings, in which:-

Fig.1 is a block diagram illustrating a data retrieving system according to the invention;

Fig. 2A and 2B show respectively a display of the system of Fig.1;

Fig.3 illustrates diagrammatically the address data memory and data point in the system of Fig.1;

Fig.4 illustrates diagrammatically the index table and index pointer in the system of Fig.1;

Fig.5 is a flowchart of retrieving data in the system of Fig. 1;

Fig.6 is a block diagram illustrating another data retrieving system according to the invention; and

Fig.7 is a flowchart of displaying data in the system of Fig.6.

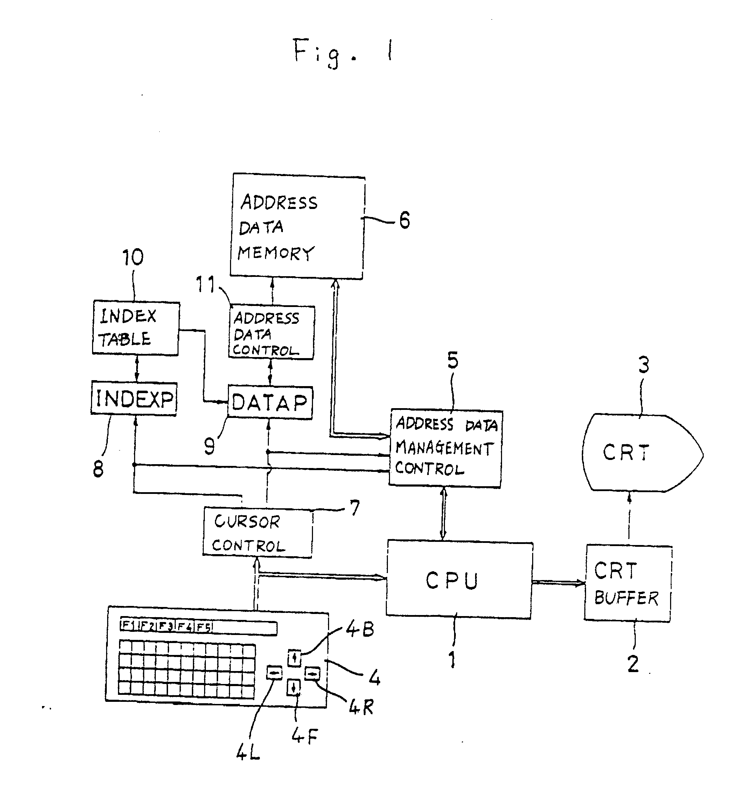

A data management system according to the invention is diagrammatically shown in Fig.1. The system of Fig.1 which is to retrieve address data is controlled mainly by a CPU 1. A CRT 3 is connected to the CPU 1 through a CRT buffer 2. For the operation of the system, a keyboard 4 having character keys, function keys and others is linked to the CPU 1. The keyboard 4 has also four cursor keys for moving cursors, i.e., a right key 4R, a left key 4L, a forward key 4F, and a backward key 4B. An address management control unit 5 is connected to the CPU 1 to control the management of the addres data. Linked to the address management control unit 5, is an address data memory 6 in which the address data are stored. The keyboard 4 is joined with an index pointer 8 and a data pointer 9 through a cursor control unit 7. The index pointer 8 is a pointer for an index table 10 which is connected to the data pointer 9. The data pointer 9 is a pointer for the address data memory 6, and is linked to the address data memory 6 through an address data control unit 11.

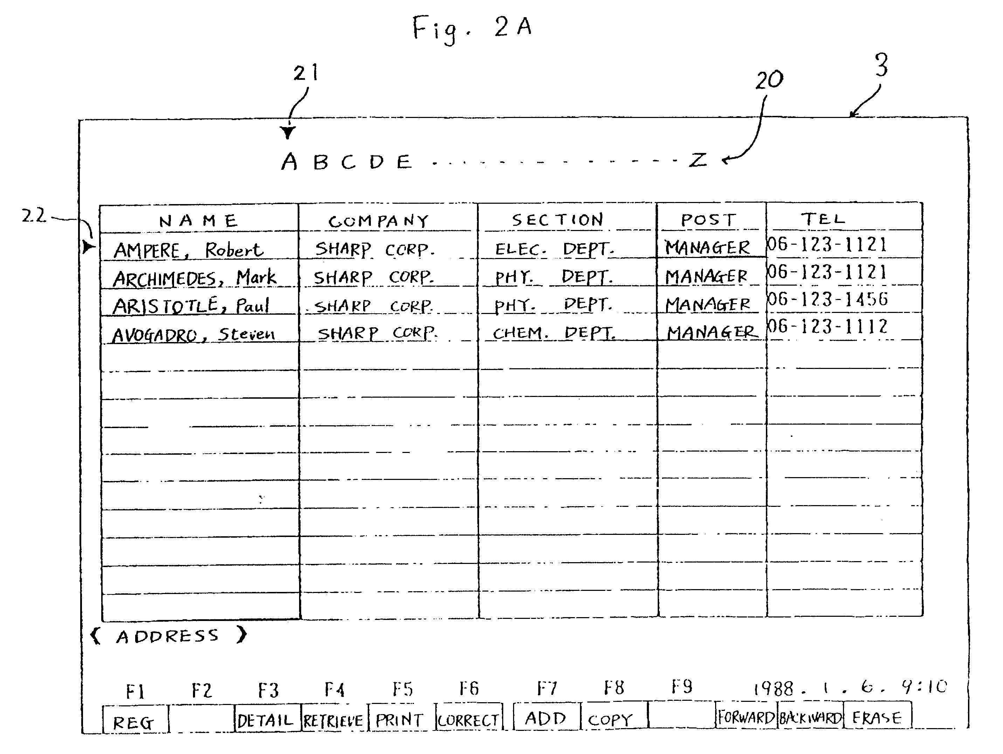

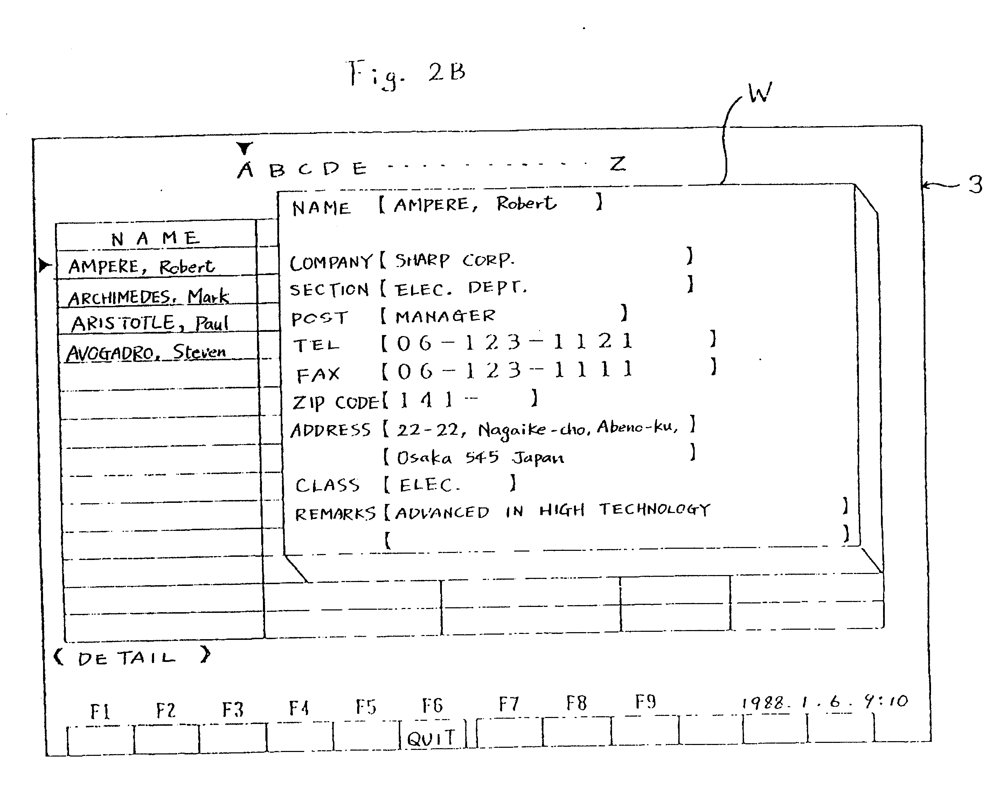

The data in the address data memory 6 can be displayed on the CRT 3. In this system, data are displayed in the following two manners: the list format as shown in Fig. 2A; and the format showing in details the data on an individual person as shown in Fig. 2B. The address data on each person include the items indicated in Fig. 2B. The address data are sorted in alphabetical order, depending upon the last name of the data entered in the field of "NAME".

Referring to Fig. 2A, the letters "A", "B", "C", ---, "Z" on the upper part of the display 3 are index symbols 20. On the uppermost part of the display 3, an index cursor 21 is displayed. On the left of the list, a data cursor 22 is displayed. Each index symbol 20 has a corresponding index element in the index table 10. The index pointer 8 indicates the index element in the index table 10 which element corresponds to the index symbol 20 located beneath the index cursor 21 (hereinafter, this index symbol is referred as "the selected index symbol"). The data pointer 9 indicates the data in the address data memory 6 which data correspond to the data displayed in the row on the right of the data cursor 22.

The data on persons having a last name the initial letter of which coincides with the selected index symbol 20 are displayed in a list. The index cursor 21 moves laterally on the index symbols 20 by the operation of the right key 4R or the left key 4L. According to the movement of the index cursor 21, the contents of the list on the display are automatically changed to the data on persons with the initial letter which coincides with the newly selected index symbol 20. The data cursor 22 moves vertically on the left side of the list by the operation of the forward key 4F or the backward key 4B. When a function key of "detail" (F3) on the keyboard is pressed, a window W is opened as shown in Fig. 2B, to display the detailed data on the person indicated by the data cursor 22.

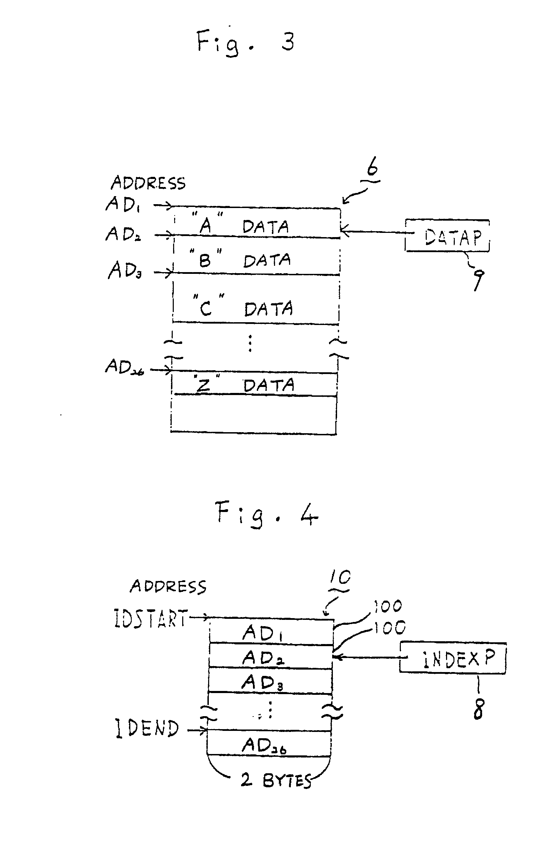

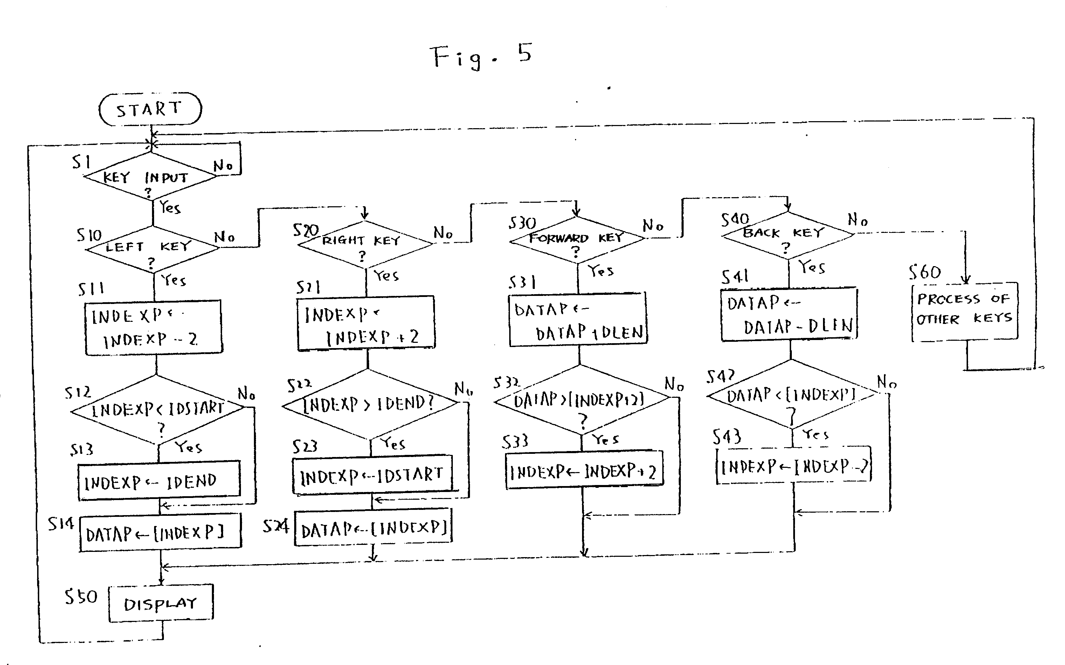

The structure of the address data memory 6 is schematically shown in Fig. 3. The data on each person are arranged in alphabetical order on the basis of the entered name data, and stored in this order in the address data memory 6. The addresses ($AD_1$ to $AD_{26}$) of the top data in each groups of the data on persons with an identical initial letter are stored in the index table 10 as index elements 100 (Fig. 4). Each index element 100 stored in the index table 10 has a length of two bytes. According to the movement of the index cursor 21, the index pointer 8 indicating the index element 100 (one of $AD_1$ to $AD_{26}$) of the index table 10 is updated. The data pointer 9 indicating the data in the address data memory 6 is updated by moving the data cursor 22.

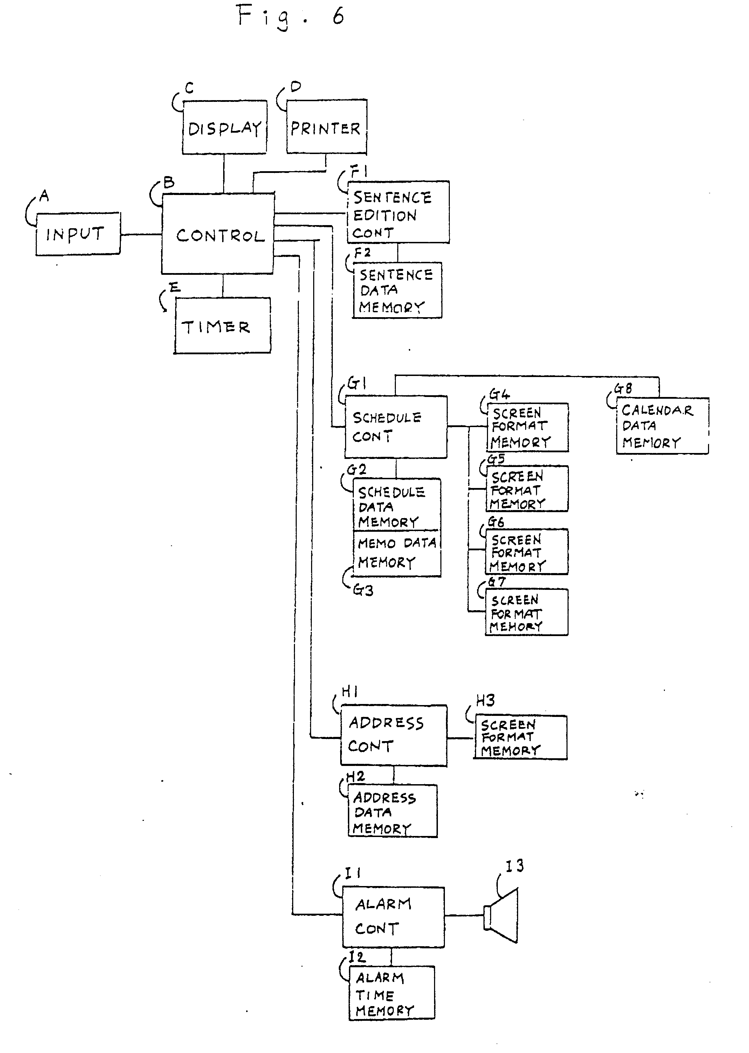

The flow of data retrieval using the index cursor 21 and the data cursor 22 in this embodiment will be described with reference to Fig. 5. Upon starting the retrieval, the list of data on the persons with a last name starting with "A" is displayed as shown in Fig. 2A, and the data cursor 22 points out the data row on the top of the list. In step S1, the system awaits a key input. Depending upon the kind of a key operated, the following processes are conducted.

(a) When the left key 4L is pressed:

The operation proceeds to step S11 in which two is subtracted from the value of the index pointer 8, so that the index pointer 8 indicates the preceding index element 100 in the index table 10. When the value of the index pointer 8 becomes less than the start address IDSTART (address $AD_1$ of the index element 100 corresponding to the letter "A") of the index table 10, the address IDEND of the last index element 100 (address $AD_{26}$ of the index element 100 corresponding to the letter "Z") in the index table 10 is assigned to the index pointer 8 (steps S12 and S13). The value of the index element indicated by the index pointer 8 is assigned to the date pointer 9 (step S14). The expression "[Addr]" in Fig. 5 means the value stored in the memory area having the address Addr.

(b) When the right key 4R is pressed:

Two is added to the value of the index pointer 8 (step S21) so that the index pointer 8 indicates the next index element 100 in the index table 10. When the value of the index pointer exceeds the value IDEND, the value of the start address IDSTART is assigned to the index pointer 8 (steps S22 and S23). The value of the index element 100 indicated by the index pointer 8 is assigned to the data pointer 9 (step S24).

(c) When the forward key 4F is pressed:

The value of DLEN which is the number of bytes in the memory area occupied by the data for one person is added to the data pointer 9 (step S31). This causes the data pointer 9 to indicate the data on the next person. When the value of the data pointer 9 becomes larger than the value of the index element 100 following the index element 100 indicated by the index pointer 8, two is added to the value of the index pointer 8 (steps S32 and S33).

d) When the backward key 4B is pressed:

The value of DLEN is subtracted from the value of the data pointer 9 (step S41), thereby causing the data pointer 9 to indicate the data of the preceding person. If the value of the index pointer 9 becomes less than the value of the index element 100 indicated by the index pointer 8, two is subtracted from the index pointer 8 (steps S42 and S43).

After the processes (a) to (d) are executed in accordance with the operation of the keys 4L, 4R, 4F and 4B, the index cursor 21 or the data cursor 22 is moved, and, if necessary, the data to be displayed are changed, so that the contents of the display is changed (step S50).

When another key is pressed, the specified process is done according to the type of the pressed key (step S60).

According to this system provided with the index cursor 21 and the data cursor 22, it becomes possible to reach the desired data promptly by an easy operation of keys.

In the above-described system, all the alphabetic letters are used as index symbols, but the manner of selecting index symbols is not limited to the above. To reduce the number of index symbols, one index symbol may represent a plurality of letters. For example, it is possible to divide the letters into groups so that the letter "A" is used as an index symbol for the letters "A" and "B", and the letter "C" for "C" and "D" and so on. In such a case, the data on persons having a last name starting with "A" or "B" are displayed by selecting the index symbol "A" and those on persons with a last name starting with "C" or "D" are displayed by selecting the index symbol "C".

In the above-described system, when changing the display of list from the data on the persons having a last name starting with "A" to those on the persons with a name starting with "C", the retrieval of the data on persons with a name of "C" begins after the data on persons with the name of "B" have been retrieved and the retrieved data have been displayed. In such a system, it is impossible, until all the retrieved data regarding one index symbol are displayed, to start retrieval on the next index symbol. If such a system contains a large amount of data, the system may have a disadvantage that a relatively long period of time is required for the retrieval and display, resulting in that the system may fail to quickly respond to the key operation by the operator.

Figure 6 illustrates a data retrieval system according to the invention which can eliminate the above-mentioned problem. The system of Fig. 6 performs a wide variety of functions such as a word processor, a scheduler and a data processor, and comprises: an input unit A having character keys and function keys; a main control unit B for controlling the data processes including a sentence edition, scheduling, address management, alarm, display, and printing; a display unit C such as an LCD or a CRT; a printing unit D for printing the data; and a timer E which is backed up with a battery and provides time information for a schedule management, alarming and others.

This system further comprises: a sentence edition control unit F1 for controlling the edition of sentences; a sentence data memory F2 for storing the produced sentence data; a schedule control unit G1 for controlling the schedule management; a schedule data memory G2 for storing the data including rank, mark, time and items; a memorandum data memory G3 for storing memorandum data corresponding to one schedule data; a screen format memory G4 for storing the display format for displaying the calendar and the schedule; another screen format memory G5 for storing the display format for displaying only the schedule; a further screen format memory G6 for storing the display format for displaying the schedule for one month; a screen format memory G7 for storing the display format for displaying annual events; and a calendar data memory G8 for storing the calendar data of several years.

The system of Fig. 6 further comprises: an address control unit H1 for executing the main control of the address management; an address data memory H2 for storing address data of persons such as a name, company name, telephone number, addresses and others; a screen format memory H3 for storing the display format for displaying the data in the address data memory H2; an alarm control unit I1 for controlling the alarm; an alarm time memory I2 for storing alarm time data; and an alarm generator I3.

The address data are displayed in a list format in the same manner as in the above-described system of Fig. 1. The index symbols 20 ("A", "B", ---, "Z") are displayed on the upper part of the display 3, and the index cursor 21 is displayed above the index symbols 20. The data on persons having a name starting with the letter beneath the index cursor 21 are displayed. When the index cursor 21 is moved to the next letter, the data on persons having names starting with the next letter are displayed.

When the data of a particular person are to be displayed, the address control unit H1, at first, retrieves the data to be displayed from the address data memory H2, and the retrieved data are processed into the display format to be stored in the screen format memory H3. Then, the address control unit H1 delivers a command that the data in the screen format memory H3 be displayed, to the main control unit B. At this stage, if the next process such as the display or the key input is to be stopped until all the data to be displayed are stored in the screen format memory H3, a prolonged period of time required for storing a large amount of data causes a delay in response to the key input. To avoid this, in this embodiment, it is designed to conduct the display process and the monitoring of a key input every time when a predetermined amount of data has been stored.

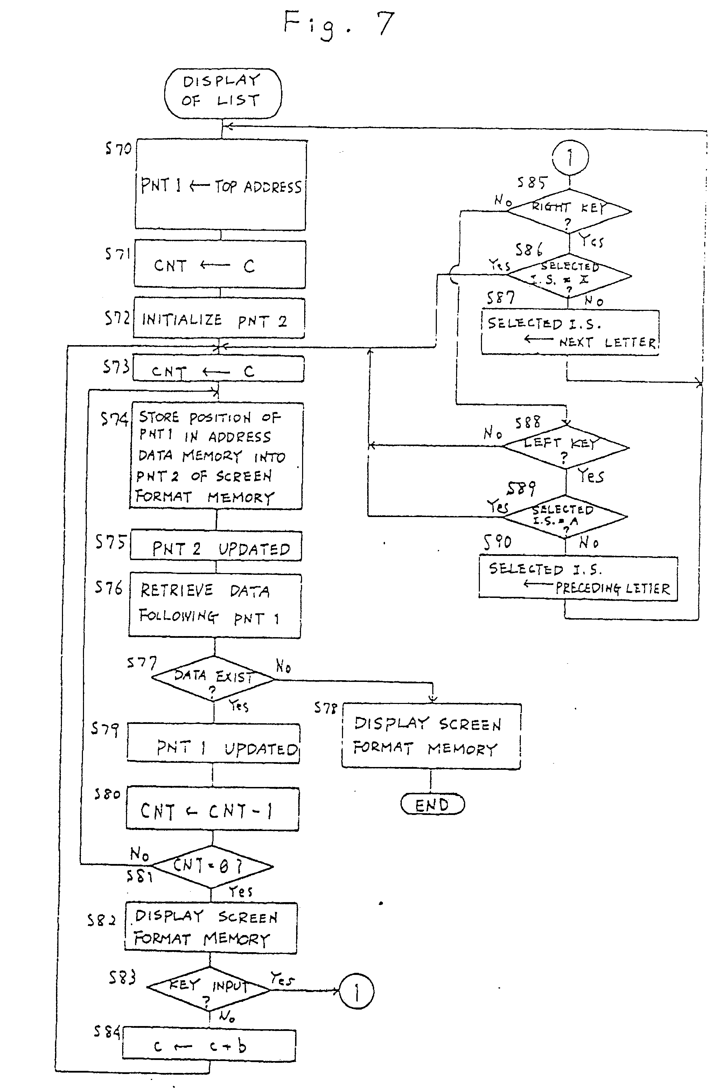

The flowchart of displaying a list is shown in Fig. 7. In step S70, the top address of the data corresponding to the selected index symbol 20 is stored in a pointer (PNT1). The initial value of a counter (CNT) for determining the timing of performing the display and the monitoring of a key input is set to c (step S71). Then, a pointer (PNT2) indicating the position of the screen format memory H3 at which the next datum is stored is initialized (step S72).

After the above initializations, CNT is set to be c (step S73). The datum stored at the position indicated by PNT1 in the address data memory H2 is transferred to the position indicated by PNT2 in the screen format memory H3, and the PNT2 is updated (steps S74 and S75). The next datum corresponding to the selected index symbol is retrieved from the address data memory H2 on the basis of PNT1 (step S76). When no succeeding datum exists, the data storage is finished, and the data in the screen format memory H3 are displayed (step S78). If the next datum exists, PNT1 is updated, and the CNT is decreased by one (steps S79 and S80). If the CNT does not come down to zero, the operation returns to step S74 to continue the operation of storing the data. If the CNT becomes zero, the data in the screen format memory H3 are displayed, and thereafter the judgment whether any key is operated or not is conducted (steps S82 and S83).

When no key is operated, a predetermined value b is added to c, and the operation returns to step S73 (step S84). Namely, the initial value of the CNT is increased step by step, so that the amount of data transferred by a series of transmissions is increased, thereby improving the efficiency of the data storage. If any key is entered, the type of the operated key is judged. When the right key 4R is operated, the selected index symbol is changed to the next index symbol (for example, a selected index symbol is changed from "A" to "B"), and the operation returns to the beginning of the routine of displaying a list. When the left key 4L is operated, the selected index symbol is changed to the preceding index symbol, and the operation goes back to the start of the routine of displaying a list. If the selected index symbol is "Z when the right key 4R is operated, if the selected index symbol is "A" when the left key 4L is operated, or if another key is operated, the operation returns to step S73 (steps S85 to S90).

When the right key 4R is pressed in the course of displaying a list, the system ceases the display on the way and displays a list of data corresponding to the index symbol which is newly indicated by the index cursor 21.

As apparent from the above description, the data retrieval system according to the invention does not require the entry of expressions and therefore is easy to operate. Moreover, the system can retrieve data in a short period of time.

It is understood that various other modifications will be apparent to and can be readily made by those skilled in the art without departing from the scope of this invention as defined by the appended claims.

**Claims**

1. A data retrieval system comprising:
a first display means for displaying a plurality of indexes which are useful in retrieving a group of data;
a first selection means (21) for selecting at least one of said indexes (20) displayed on said first display means;
a retrieval means (5 to 11) for retrieving data, based on said selected index (20);
a second display means for displaying retrieved data; and
a second selection means (22) for selecting one of said retrieved data displayed on said second display means.

2. A data retrieval system according to claim 1, wherein said first selection means comprises a first mark (21) which is displayed on said first display means, said first mark being movable along said displayed indexes (20).

3. A data retrieval system according to claim 1 or claim 2, wherein said second selection means comprises a second mark (22) which is displayed on said second display means, said second mark being movable along said displayed data.

4. A data retrieval system comprising:
a first display means for displaying a plurality of indexes which are useful in retrieving a group of data;
a first selection means (21) for selecting at least one of said indexes (20) displayed on said first display means;
a retrieval means (5 to 11) for retrieving data, based on said selected index (20);
a second display means for displaying retrieved data;
a second selection means (22) for selecting one of said retrieved data displayed on said second display means,
a detection means (7,8,10) for detecting a further selection of another index during the display of said retrieved data on said second display means; and
a control means (5) for controlling said retrieval means to retrieve other data, based on said other selected index, when said detection means detects the further selection.

5. A data retrieval system according to claim 4, wherein said control means (5) controls said second display means (W) to quit the display of said retrieved data when said detection means detects the further selection.

6. A data retrieval system according to claim 4 or claim 5, wherein said first selection means comprises a first mark (21) which is displayed on said first display means (3), said first mark being movable along said displayed indexes (20).

7. A data retrieval system according to any of claims 4 to 6, wherein said second selection means comprises a second mark (22) which is displayed on said second display means, said second mark being movable along said displayed data.

# Fig. 1

## Fig. 2A

| N A M E | COMPANY | SECTION | POST | TEL |
|---|---|---|---|---|
| AMPERE, Robert | SHARP CORP. | ELEC. DEPT. | MANAGER | 06-123-1121 |
| ARCHIMEDES, Mark | SHARP CORP. | PHY. DEPT. | MANAGER | 06-123-1121 |
| ARISTOTLE, Paul | SHARP CORP. | PHY. DEPT. | MANAGER | 06-123-1456 |
| AVOGADRO, Steven | SHARP CORP. | CHEM. DEPT. | MANAGER | 06-123-1112 |

A B C D E · · · · · · · · · · · · · · · · Z

〈 ADDRESS 〉

| F1 | F2 | F3 | F4 | F5 | F6 | F7 | F8 | F9 | 1988.1.6. 9:10 |
|---|---|---|---|---|---|---|---|---|---|
| REG | | DETAIL | RETRIEVE | PRINT | CORRECT | ADD | COPY | | FORWARD BACKWARD ERASE |

EP 0 342 964 A2

Fig. 2B

EP 0 342 964 A2

# Fig. 3

# Fig. 4

# Fig. 5

START

S1 KEY INPUT ? — No

Yes

S10 LEFT KEY ? — No

Yes

S11 INDEXP ← INDEXP − 2

S12 INDEXP < IDSTART ? — No

Yes

S13 INDEXP ← IDEND

S14 DATAP ← [INDEXP]

S20 RIGHT KEY ? — No

Yes

S21 INDEXP ← INDEXP + 2

S22 INDEXP > IDEND? — No

Yes

S23 INDEXP ← IDSTART

S24 DATAP ← [INDEXP]

S30 FORWARD KEY ? — No

Yes

S31 DATAP ← DATAP + DLEN

S32 DATAP > [INDEXP+2] ? — No

Yes

S33 INDEXP ← INDEXP + 2

S40 BACK KEY ? — No

Yes

S41 DATAP ← DATAP − DLEN

S42 DATAP < [INDEXP] ? — No

Yes

S43 INDEXP ← INDEXP − 2

S60 PROCESS OF OTHER KEYS

S50 DISPLAY

EP 0 342 964 A2

Fig. 6

# Fig. 7

DISPLAY OF LIST

S70 — PNT 1 ← TOP ADDRESS

S71 — CNT ← C

S72 — INITIALIZE PNT 2

S73 — CNT ← C

S74 — STORE POSITION OF PNT1 IN ADDRESS DATA MEMORY INTO PNT 2 OF SCREEN FORMAT MEMORY

S75 — PNT 2 UPDATED

S76 — RETRIEVE DATA FOLLOWING PNT 1

S77 — DATA EXIST ? — No → S78
  Yes

S79 — PNT 1 UPDATED

S80 — CNT ← CNT - 1

S81 — CNT = 0 ? — No
  Yes

S82 — DISPLAY SCREEN FORMAT MEMORY

S83 — KEY INPUT ? — Yes → 1
  No

S84 — C ← C + b

S85 — RIGHT KEY ? — No
  Yes

S86 — SELECTED I.S. = X ? — Yes
  No

S87 — SELECTED I.S. ← NEXT LETTER

S88 — LEFT KEY ? — No
  Yes

S89 — SELECTED I.S. = A ? — Yes
  No

S90 — SELECTED I.S. ← PRECEDING LETTER

S78 — DISPLAY SCREEN FORMAT MEMORY

END